# EUROPEAN PATENT APPLICATION

(11) **EP 1 235 426 A2**
(43) Date of publication of application: **28.08.2002**
(21) Application number: 02076266.2
(22) Date of filing: 11.02.2002
(51) Int. Cl.: H04N 5/46, H04N 7/01

(54) **A method for presenting improved motion image sequences**

(30) Priority: 23.02.2001 US 792344
(71) Applicant: EASTMAN KODAK COMPANY, Rochester, New York 14650 (US)
(72) Inventor: Cok, Ronald S., Eastman Kodak Company, Rochester, New York 14650-2201 (US); Kennel, Glenn L., c/o Eastman Kodak Company, Rochester, New York 14650-2201 (US); Riek, Jonathan K., c/o Eastman Kodak Company, Rochester, New York 14650-2201 (US)
(74) Representative: Nunney, Ronald Frederick Adolphe

(57) **Abstract**

A method for the presentation of digital motion image sequences includes the steps of capturing a digital motion image sequence at a given frame rate; temporally interpolating the digital motion image sequence to a higher frame rate than the given frame rate to produce interpolated digital image frames; and storing the digital motion image sequence and the interpolated digital image frames as extensions to the stored digital image sequence, whereby the stored digital image motion sequence can be presented at the given frame rate or combined with the interpolated digital image frames for display at the higher frame rate.

## Description

The present invention relates to an improved method for presenting motion image sequences. In particular, temporal sequences of digital images are presented at a higher frame rate using temporally interpolated frames stored as extensions to existing frame storage.

Motion pictures have been enjoyed by viewers for decades. These motion image sequences are composed of a series of still images (frames) presented sequentially to the viewer. If the frame rate is high enough, the viewer will see the images as a smooth sequence representing uninterrupted motion. Traditional films use a frame rate of 24 frames per second while television NTSC broadcast standards use 30 frames (60 interlaced fields) per second and PAL standards use 25 frames per second. Since image sequences represent vast amounts of image data, the frame rate chosen for a specific motion imaging system is a compromise between the amount of data, the bandwidth available to move the data, and the quality of the viewing experience. The amount of data has a direct relationship to the cost of storage, manipulation, and transmission.

Typically, the quality of the viewing experience is also constrained by the acquisition and presentation of the sequence, that is, the limitations of the cameras and projectors. Motion sequences are readily captured at frame rates of 48 frames per second and higher using traditional motion picture film. Likewise, very high-speed video capture systems are also available. Digital image acquisition systems, using CCDs and the like, can also acquire image sequences at high speed. Projection equipment can also support varied frame rates. Traditional motion image print film used in conventional theatres can be presented at higher frame rates (again, for example, at 48 frames per second); digital presentations on video or computer equipment are often refreshed at 25, 30, 60, or 72 frames per second.

The limitations of the imaging equipment affect the rate at which motion picture sequences should be viewed. Even with existing motion picture film equipment, higher frame rates contribute to clearer and more pleasing imagery but at a higher film cost. Moreover, as the quality of the equipment improves and the nature of the equipment changes, different image artifacts can be seen at different frame rates. Hence, modem digital motion imaging camera and presentation equipment can make otherwise unnoticeable artifacts perceptible. The use of higher frame rates can reduce these artifacts and, in general, increase viewer satisfaction.

To reduce the cost of digital image sequence storage, a variety of image compression technologies have been developed. The most advanced of these applied to image sequences utilizing motion vector analysis. Motion vector analysis relies on an understanding of the movement of objects within the field of view and then storing information about the movement rather than the objects themselves to reduce the total amount of information necessary to reconstruct the image sequence. A great variety of techniques have been developed to create motion vectors for image sequences and are known in the art. Once compressed, motion imagery is transmitted and reconstructed for presentation at a much lower cost than would otherwise be the case.

Image sequences can also be interpolated, that is, additional frames created to modify the overall frame rate. The interpolated images can be based upon prior and/or succeeding frames with similar content. Interpolation is useful, for example, in presenting material at one frame rate when it was acquired at a different frame rate. A common problem is the presentation of motion picture originated material (at 24 frames per second) on a television (at 25 or 30 frames per second). This modification is often done by repeating some of the frames in the motion sequence. Motion vector compressed data can be used to assist in the process of creating these interpolated frames. For example, EP 0 852 096 B1 "Motion Compensated Interpolation" describes a system for conversion between television standards with different frame rates by using motion interpolation and reliability calculations to estimate the interpolated frames. Image interpolation can also be used to reconstruct an image sequence when frames are deliberately removed to reduce storage or bandwidth needs. In any case, the calculation of motion vectors is a complex and difficult task, requiring significant and expensive computing equipment. Moreover, not only is the calculation of motion vectors a complex task, it produces artifacts perceptible to the viewer that are dependent upon the nature of the image sequence content.

There is a need, therefore, for a method which provides a high-quality viewing experience using a high frame rate presentation while suppressing artifacts and reducing costs through low frame rate origination and compatibility with existing presentation equipment.

This need is met according to the present invention by providing a method for the presentation of digital motion image sequences including the steps of capturing a digital motion image sequence at a given frame rate; temporally interpolating the digital motion image sequence to a higher frame rate than the given frame rate to produce interpolated digital image frames; and storing the digital motion image sequence and the interpolated digital image frames as extensions to the stored digital image sequence, whereby the stored digital image motion sequence can be presented at the given frame rate or combined with the interpolated digital image frames for display at the higher frame rate.

The present invention has the advantages of providing an improved quality presentation of motion image sequences captured by existing image capture devices and maintaining compatibility with existing presentation devices.

Fig. 1 is a flow chart illustrating the method of the present invention; and

Fig. 2 is a schematic diagram illustrating a system useful for practicing the method of the present invention.

The present invention is a method for the presentation of digital motion image sequences at a higher frame rate than the original frame rate at which the motion image sequence was captured. This higher rate of presentation produces a smoother and more pleasing viewing experience, particularly for digital image projectors and digital image capture devices. In order to maintain compatibility with other projectors that are not modified as described in the present invention, the interpolated image sequence data is stored in such a way that conventional projectors can ignore the additional data while specially equipped projectors can utilize the data to provide a superior viewing experience.

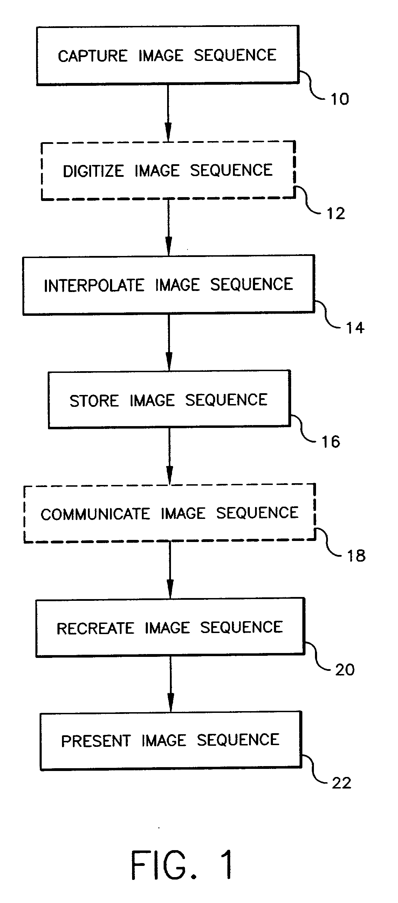

Referring to Fig. 1 an image is captured **10.** The image capture can be done using either a conventional motion picture camera using motion picture film, a video camera, or a digital motion image camera that captures and stores a digital image. In the first two cases, once the image sequence is captured, it is then digitized **12,** for example by scanning the motion picture film, or converting the video signals produced by the video camera to digital image signals. In any case, the image sequence is acquired at a given frame rate, typically 24 frames per second for motion picture film, or 30 frames per second for NTSC standard video.

If the original image sequence were to be acquired at a higher frame rate (for example, 48 frames per second) in an attempt to produce a higher quality motion image sequence, the cost of film (or other storage media such as video tape) would be doubled. The cost of manipulating, storing, and transmitting the data would likewise be greatly increased. It is the object of this invention to avoid this additional cost while accruing the benefits of a higher frame rate in presentation.

Once the digital image sequence is available, the digital image sequence is temporally interpolated **14** using a digital image interpolation method to produce an image sequence at a higher frame rate. This higher frame rate reduces motion artifacts in the displayed image. The higher frame rate preferentially is an integral multiple of the original frame rate which is easier to calculate and control than non-integral multiples. The interpolation can include known techniques such as frame combination, or more sophisticated techniques relying on motion vector analysis such as that used in the Kodak Cineon System.

Not all of the image sequence needs to be interpolated. Only those portions of the image sequence that will benefit from interpolation in the anticipated presentation devices may be interpolated. Portions of the image sequence which will not improve noticeably or which will include objectionable artifacts resulting from the interpolation, may be excluded from interpolation. In contrast, those portions that will benefit from or for which interpolation is desired for artistic or other reasons may be interpolated. The frame rate of portions of the image sequence which are not interpolated may be increased by simple frame replication.

Once the image sequence is suitably interpolated **14,** it is stored **16** for example on a conventional digital storage medium such as magnetic tape, magnetic disks, or optical disks. According to the present invention, the originally captured image sequence is stored as a standard computer file format of sequential frames, and the interpolated frames (including any replicated frames) are stored as an extension to the standard computer file. The extension can be implemented using information in file headers or stored separately or otherwise associated with the original image sequence in such a way that the original image sequence without the interpolated frames can be accessed by a standard presentation device. An example of such a storage format is the MPEG format with the interpolated frames stored as file extensions. The interpolated frames may be tagged to indicate their location in the digital image sequence. Alternatively, frame location data may be provided to specify the construction of a higher frame rate sequence from the original sequence and the interpolated frames.

The digital image sequence and/or the interpolated frames may be compressed prior to storage to reduce the storage or transmission needs of the system. If the compression involves motion vector analysis, such as the MPEG standard, the interpolation method may utilize the same motion vector information used in the compression. Conversely, if the interpolation method involves motion vector analysis, such as the method employed in the Kodak Cineon System, the compression may utilize the same motion vector information used in the interpolation.

It is also possible to store the interpolated frame information as a description of an image rather than the image itself. For example, a motion vector map indicating the changes in position of various elements in an image in the sequence, or a simple code indicating that an image is to be replicated may be stored. Fundamentally, this amounts to a compression of the interpolated image sequence which must be reconstructed by the presentation device. In this way, the computing requirements of the encoding and decoding devices may be traded off. Preferably, the compression method used for the original image frames will be used for the interpolated frames so as to reduce the computational requirements of the presentation device.

It may also be useful to compress and store the original image frames before interpolation. Since standard hardware may be available to support standard image compression, it may be cost-effective to first use the available, relatively inexpensive compression devices and then modify the resulting image files, where necessary, to accommodate the interpolated data. Alternatively, a more complex control mechanism may be useful to apply an existing compression device for all the image sequence frames.

Once stored, the image sequence may be communicated **18** for example by transmitting the image sequence using telecommunications such as cable, satellite, the internet, etc. Alternatively, no transmission may be desired and the image sequence may be stored **16** in temporary digital storage such as RAM and presented immediately.

Upon arrival at a suitable presentation device such as a digital projector, the interpolated digital image sequence is recreated **20.** If the image sequence has not been compressed and the interpolated frames are ignored, the recreation can simply be a matter of reading the stored media or receiving a transmission and displaying the standard digital image file. If the image is compressed, it is first decompressed. If a suitable projector capable of reading the interpolated frames is used, the interpolated frames are inserted into the sequence using the location tags or frame location data associated with the sequence. Once recreated, the digital image sequence is presented to a viewer **22** at the higher frame rate.

Alternatively, the original digital image sequence can be compressed using a standard compression technique, and the decompression and interpolation steps can also be implemented within a presentation device. The interpolation method may use existing MPEG standards and compression devices. By first compressing the data, then communicating it to the presentation device, the presentation device may then utilize the MPEG information to create interpolated frames in real-time. This approach, however, requires a much greater computing capability within the presentation device.

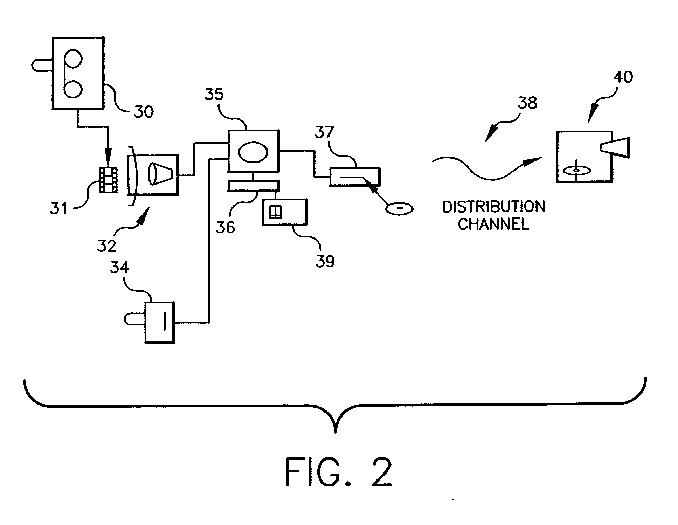

Fig. 2 illustrates a system that may be used to implement the method of the present invention. In Fig. 2 a conventional motion picture camera **30** exposes film **31** that is developed and then digitized by a scanner **32** to produce a digital image sequence. Alternatively, a digital camera **34** can be used to capture digital image sequences directly with no need for subsequent digitization. The digital image sequence is supplied to a digital computer device **36** which processes the digital image sequence as described above. The digital computer **36** includes a display **35** and an operator interface **39,** with which an art director can view the digital image sequence and select those portions of the sequence which are to be interpolated. The processed digital image sequence is then stored for example on an optical disc **37** or transmitted over a distribution channel **38.** The digital image sequence can be displayed to a viewer on a presentation device such as a digital projector **40.**

## Claims

1. A method for the presentation of digital motion image sequences comprising the steps of:
a) capturing a digital motion image sequence at a given frame rate;
b) temporally interpolating the digital motion image sequence to a higher frame rate than the given frame rate to produce interpolated digital image frames; and
c) storing the digital motion image sequence and the interpolated digital image frames as extensions to the stored digital image sequence, whereby the stored digital image motion sequence can be presented at the given frame rate or combined with the interpolated digital image frames for display at the higher frame rate.

2. The method claimed in claim 1, further comprising the steps of:
d) generating an interpolated digital motion image sequence by adding the interpolated digital image frames to the digital motion image sequence; and
e) displaying the interpolated digital image motion sequence at the higher frame rate.

3. The method claimed in claim 1, further comprising the step of:
d) displaying the stored digital motion image sequence at the given frame rate.

4. The method claimed in claim 1, wherein the step of temporally interpolating employs motion vectors describing the movement of objects in sequential frames.

5. The method claimed in claim 1, wherein the higher frame rate is an integral multiple of the given frame rate.

6. The method claimed in claim 5, wherein the given frame rate is 24 frames per second and the higher frame rate is 48 frames per second.

7. The method claimed in claim 5, wherein the given frame rate is 30 frames per second and the higher frame rate is 60 frames per second.

8. The method claimed in claim 1, further comprising the step of transmitting the stored digital motion image sequence and the extensions to a presentation device.

9. The method claimed in claim 1, wherein the digital motion image sequence and the extensions are stored on a magnetic or optical tape.

10. The method claimed in claim 1, wherein the digital motion image sequence and the extensions are transmitted by a telecommunication system.

11. The method claimed in claim 1, further comprising the step of compressing the digital motion image sequence prior to storing.

12. The method claimed in claim 11, further comprising the step of compressing the interpolated digital image frames prior to storing as extensions.

13. The method claimed in claim 11, wherein the compressing step employs motion vectors.

14. The method claimed in claim 11, wherein the compressing step employs a Motion Pictures Expert Group (MPEG) standard.

15. The method claimed in claim 1, wherein only a portion of the digital motion image sequence is interpolated.

16. The method claimed in claim 1, wherein the interpolated digital image frames are stored as complete images.

17. The method claimed in claim 1, wherein the interpolated digital image frames are stored as data that can be used with the digital motion image sequence to construct complete images.

18. The method claimed in claim 17, wherein the construction of the interpolated digital image frames is performed in a presentation device.

19. The method claimed in claim 17, wherein the data includes motion vectors.

20. The method claimed in claim 12, wherein the digital motion image sequence is compressed and stored prior to compressing and storing the interpolated image frames.

21. The method claimed in claim 11, wherein the compression step employs compression employing motion vectors and the interpolation step uses the same motion vectors.

22. The method claimed in claim 21, wherein the compression step employs MPEG compression.
